# FASCICULE DE BREVET EUROPEEN

(11) **EP 1 721 136 B1**
(45) Date de publication et mention de la délivrance du brevet: **06.05.2009**
(21) Numéro de dépôt: 05734192.7
(22) Date de dépôt: 04.03.2005
(51) Int. Cl.: G01J 5/10, G01J 5/20

(54) **PROCEDE DE REALISATION D'UN DISPOSITIF POUR LA DETECTION THERMIQUE D'UN RAYONNEMENT COMPORTANT UN MICROBOLOMETRE ACTIF ET UN MICROBOLOMETRE PASSIF**
VERFAHREN ZUR HERSTELLUNG EINER EINRICHTUNG ZUR THERMISCHEN DETEKTION VON STRAHLUNG MIT EINEM AKTIVEN MIKROBOLOMETER UND EINEM PASSIVEN MIKROBOLOMETER
METHOD FOR PRODUCTION OF A DEVICE FOR THERMAL DETECTION OF RADIATION COMPRISING AN ACTIVE MICROBOLOMETER AND A PASSIVE MICROBOLOMETER

(30) Priorité: 04.03.2004 FR 0402263
(43) Date de publication de la demande: 15.11.2006
(73) Titulaire: COMMISSARIAT A L'ENERGIE ATOMIQUE, 75015 Paris (FR); ULIS, 38113 Veurey Voroize (FR)
(72) Inventeur: OUVRIER-BUFFET, Jean-Louis, F-74320 Sévrier (FR); CARLE, Laurent, F-38000 Grenoble (FR); VIALLE, Claire, F-38120 Saint-Egrève (FR); VILAIN, Michel, F-38450 Saint-Georges de Commiers (FR)
(74) Mandataire: Jouvray, Marie-Andrée
(86) Numéro de dépôt international: PCT/FR2005/000518
(87) Numéro de publication internationale: WO 2005/085782

(56) Documents cités:
- EP-A- 0 566 156
- EP-A- 0 892 257
- EP-A- 1 243 903

## Description

### Domaine technique de l'invention

L'invention concerne un procédé de réalisation d'un dispositif pour la détection thermique d'un rayonnement comportant au moins un microbolomètre actif et au moins un microbolomètre passif, comportant chacun une membrane suspendue faisant fonction d'absorbeur du rayonnement, de thermomètre et de connexions électriques, les microbolomètres actifs et passifs étant formés simultanément sur un même substrat de support et un écran réfléchissant étant formé sur l'ensemble du dispositif, puis éliminé en regard des emplacements des microbolomètres actifs.

L'invention concerne également un microbolomètre passif réalisé par un tel procédé.

### État de la technique

De manière générale, un microbolomètre à micropont comporte une membrane suspendue sur un substrat de support par des éléments d'ancrage. La membrane présente trois fonctions, à savoir l'absorption d'un rayonnement incident grâce à un élément absorbeur, la transformation des calories en variation de résistance grâce à un élément thermométrique et des connexions électriques avec le substrat de support grâce à une ou plusieurs électrodes.

Ces trois fonctions peuvent être réalisées par trois éléments distincts. L'élément absorbeur, qui s'échauffe sous l'effet d'un rayonnement incident, transmet la chaleur à l'élément thermométrique, dont l'élévation de température est, de préférence, mesurée électroniquement par une électronique de mesure externe au microbolomètre. Les connexions électriques de la membrane avec le substrat de support se font par l'intermédiaire, par exemple, des électrodes. L'élément absorbeur est ainsi destiné à convertir un flux lumineux incident, par exemple des photons, en flux calorifique. Le flux calorifique induit une variation de température de l'élément thermométrique, qui convertit les variations de température en signaux électriques. Le substrat de support, au-dessus duquel est suspendue la membrane, constitue le point froid du microbolomètre et comporte l'électronique de mesure qui exploite les signaux électriques.

Dans certains cas, ces trois fonctions peuvent être réalisées par deux éléments seulement. À titre d'exemple, un matériau bolométrique peut faire office à la fois d'élément absorbeur et d'élément thermométrique, les connexions électriques avec le support étant alors réalisées par les électrodes connectées à l'élément thermométrique.

Dans une autre variante, les électrodes peuvent faire simultanément office de connexions électriques et d'élément absorbeur. Le matériau bolométrique constitue alors uniquement l'élément thermométrique.

Les électrodes, par exemple sous forme d'un serpentin, peuvent également faire office simultanément de connexions électriques et d'élément thermométrique, l'élément absorbeur étant distinct.

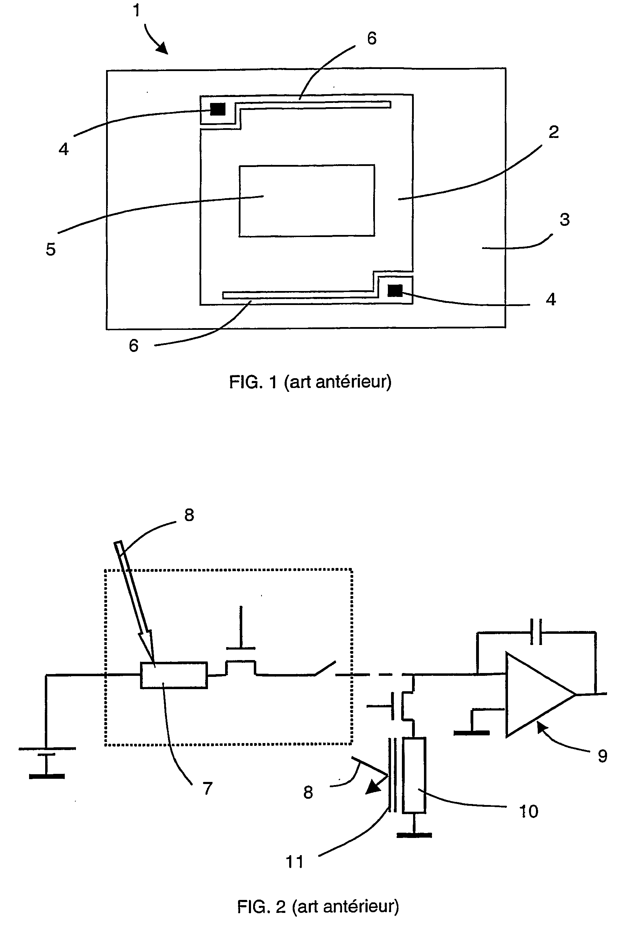

Sur la figure 1, le microbolomètre 1 comporte une membrane suspendue sur un substrat de support 3 par l'intermédiaire de deux éléments d'ancrage 4, constituant également un lien thermique entre la membrane et le substrat 3. La membrane comporte au moins un élément absorbeur 2 portant un élément thermométrique 5, dont la variation de température est mesurée par l'intermédiaire d'électrodes (non représentées). Le substrat de support 3 comporte une électronique de mesure (non représentée), afin d'exploiter la mesure effectuée par le microbolomètre 1. La sensibilité de la mesure peut être améliorée en introduisant des bras d'isolement 6 entre le substrat de support 3 et la membrane, afin de limiter les pertes thermiques de la membrane et par conséquent de préserver son échauffement.

L'élément thermométrique 5 peut être de type résistif. C'est alors la variation de la résistance et/ou de l'impédance de l'élément thermométrique 5 qui est mesurée. À titre d'exemple, l'élément thermométrique 5 peut être constitué par un matériau bolométrique en contact avec la ou les électrodes, qui, grâce à une configuration particulière, par exemple en forme de serpentin, jouent simultanément le rôle de l'élément absorbeur et des connexions électriques. Un rayonnement incident absorbé par le microbolomètre 1 provoque alors une augmentation de la température de l'absorbeur 2, qui induit une variation de la résistance électrique de l'élément thermométrique 5. Cette variation de résistance est mesurée aux bornes des électrodes, qui sont, de préférence, solidaires des éléments d'ancrage 4.

Un fonctionnement performant nécessite trois conditions principales au niveau du microbolomètre 1 : une faible masse calorifique, une bonne isolation thermique de la membrane vis-à-vis du substrat de support 3 et une bonne sensibilité de l'effet de conversion de l'échauffement en signal électrique. Les deux premières conditions sont obtenues grâce à une mise en oeuvre en couches minces du microbolomètre 1.

La figure 2 illustre le principe de lecture d'un dispositif de détection à microbolomètre. Le dispositif comporte un microbolomètre de mesure 7, ou microbolomètre actif, qui absorbe un rayonnement incident 8, par exemple des rayons infrarouges. La variation de la résistance du microbolomètre 7 est représentative de la valeur de ce rayonnement. Une lecture en courant est fréquemment utilisée pour faire cette mesure. Le courant, à la sortie du microbolomètre 7, comporte une fraction variable et une fraction invariante. En effet, le détecteur fonctionne en relatif, c'est-à-dire qu'il détecte un signal continu invariant de fond, qui peut gêner la mesure du signal variable utile, qui est, en général, petit devant ce signal de fond. Il est donc souhaitable d'éliminer cette fraction invariante du courant pour obtenir une mesure optimale de la valeur du rayonnement.

Afin d'augmenter la sensibilité de la lecture, la fraction invariante du courant est, de préférence, dérivée dans une branche de dérivation, pour n'envoyer que la partie variable du courant vers un intégrateur 9. En termes d'électronique, l'élément qui sert à la branche de dérivation doit être peu bruyant, il ne doit pas engendrer trop de perturbations. Pour cela, la branche de dérivation est réalisée par l'intermédiaire d'une résistance suffisamment élevée et polarisée en injection directe. Une solution classique consiste à utiliser un microbolomètre passif comme branche de dérivation, c'est-à-dire un microbolomètre qui ne détecte pas le rayonnement.

La branche de dérivation comporte donc, comme représenté figure 2, un microbolomètre de dérivation 10, qui est rendu aveugle, par un écran de protection 11 placé entre le rayonnement 8 et le microbolomètre 10. Le microbolomètre 10 est ainsi transformé en microbolomètre passif, qui n'absorbe aucun rayonnement et sert de référence.

L'efficacité du dispositif de détection est donc également liée aux caractéristiques du microbolomètre passif 10, qui doit se révéler totalement aveugle et présenter avantageusement une résistance thermique minimale.

D'autres dispositifs de détection utilisent un montage en pont comportant deux microbolomètres dont l'un est rendu passif par interposition d'un écran de protection entre le rayonnement et ce microbolomètre (EP-A-0892257 et EP-A-0566156).

Le fait de placer un écran de protection devant le microbolomètre pose des problèmes au niveau de la fabrication.

### Objet de l'invention

L'invention a pour but de remédier à ces inconvénients et a pour objet la réalisation d'un microbolomètre passif, dont la fabrication de l'écran de protection est intégrée dans le procédé de fabrication du microbolomètre passif.

Selon l'invention, ce but est atteint par les revendications annexées et, plus particulièrement, par le fait que, la membrane comportant un élément thermométrique et un élément absorbeur du rayonnement assurant les connexions électriques, le microbolomètre passif est formé sur l'écran réfléchissant, qui comporte au moins une couche métallique en contact avec l'élément absorbeur de la membrane.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente un microbolomètre selon l'art antérieur.
La figure 2 représente schématiquement le principe de lecture d'un dispositif de détection thermique d'un rayonnement selon l'art antérieur.
La figure 3 représente un mode de réalisation particulier d'un microbolomètre passif selon l'invention.
Les figures 4 à 7 représentent différentes étapes d'un mode de réalisation schématique d'un procédé de fabrication d'un dispositif de détection thermique d'un rayonnement comportant un microbolomètre passif selon la figure 3.

### Description de modes particuliers de réalisation

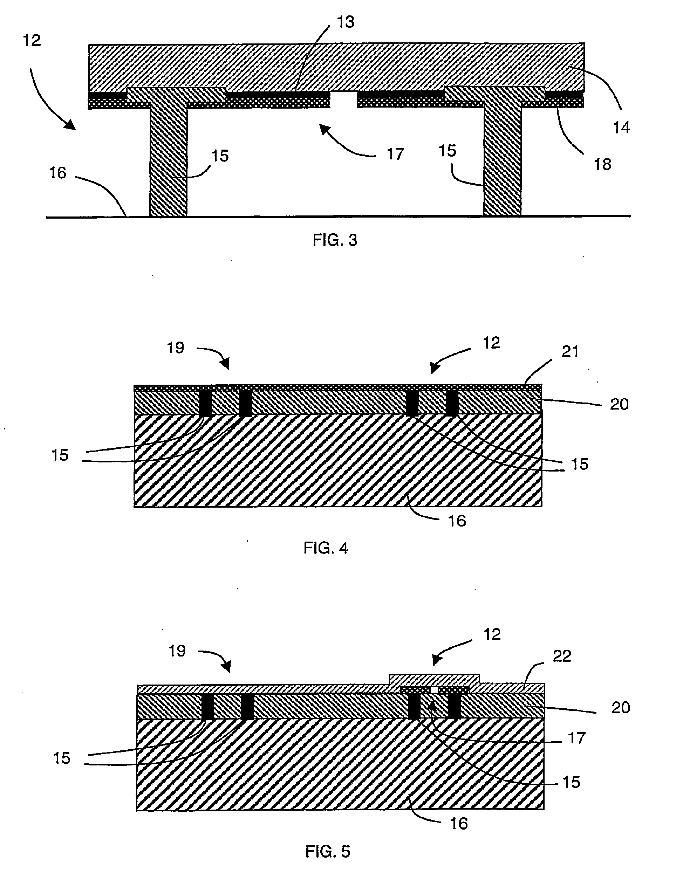

Dans le mode particulier de réalisation représenté à la figure 3, le microbolomètre passif 12 comporte une membrane suspendue avec un élément absorbeur de rayonnement 13 et un matériau bolométrique, constituant l'élément thermométrique 14 du microbolomètre 12. La membrane est portée par deux éléments d'ancrage 15 disposés sur un substrat de support 16.

Le microbolomètre passif 12 comporte un écran de protection réfléchissant 17 formé sous la membrane. L'écran de protection 17 est constitué, par exemple, par au moins une couche réfléchissante 18, de préférence métallique, car le métal présente de bonnes caractéristiques de réflexion d'un rayonnement, notamment d'un rayonnement infrarouge. L'écran 17 doit être réfléchissant au rayonnement incident et ne doit pas court-circuiter l'élément thermométrique 14 constitué par le matériau bolométrique. L'écran de protection 17 est donc en contact électrique uniquement avec l'élément absorbeur 13 et l'élément thermométrique 14, constitué par le matériau bolométrique, est disposé sur l'élément absorbeur 13.

Les matériaux constitutifs de l'écran de protection 17 sont choisis, de manière à ce que l'écran de protection 17 présente les propriétés optiques et thermiques nécessaires pour réfléchir le rayonnement. La couche 18 est en métal choisi, de préférence, parmi l'aluminium, l'argent, l'or et le cuivre, qui ont un excellent pouvoir réflecteur en infrarouge et constituent de véritables miroirs optiques. L'épaisseur de la couche métallique 18 est de l'ordre de 500Å à 2000Å.

Il est possible de choisir d'autres matériaux pour l'écran réfléchissant 17. À titre d'exemple, l'écran 17 peut comporter un empilement intrinsèquement isolant de couches de matériaux, notamment des métaux ou des oxydes d'indium et d'étain dopés.

L'écran 17 peut également être constitué par un réflecteur de type interférentiel, à savoir un écran comportant un empilement de couches minces isolantes ou conductrices. L'écran 17 peut aussi être réalisé en un matériau avec effet de texture de surface ou de volume. Il peut également être réalisé en un matériau cermet, à savoir une céramique avec des inserts de métal, avec un seuil de conduction dépendant de la concentration de métal dans la céramique.

Le matériau bolométrique constituant l'élément thermométrique 14 est, par exemple, du silicium polycristallin ou amorphe de type p ou n faiblement ou fortement résistif. Le matériau bolométrique peut être également un oxyde de vanadium élaboré dans une phase semi-conductrice, une ferrite ou une manganite.

Le substrat de support 16 est un support, par exemple, à base de silicium. Il assure la rigidité mécanique du microbolomètre passif 12 et comporte, de préférence, des dispositifs (non représentés) de polarisation et de lecture de la résistance de l'élément thermométrique. Il peut comporter également des composants de multiplexage permettant, notamment dans le cas d'un détecteur comportant plusieurs microbolomètres avec une structure matricielle, de sérialiser les signaux issus des différents microbolomètres et de les transmettre vers un nombre réduit de sorties, afin d'être exploités par un système d'imagerie usuel.

Dans le mode particulier de réalisation de la figure 3, la résistance par carré R_{□} de l'élément absorbeur 13 doit être de l'ordre de 300Ω pour absorber le rayonnement. Pour que la résistance par carré de l'ensemble constitué par l'élément absorbeur 13 et l'écran 17 soit celle d'un réflecteur, à savoir une résistance par carré de l'ordre de 0,1Ω, l'élément absorbeur 13 doit être en contact électrique avec l'écran réfléchissant 17. La résistance par carré de l'élément absorbeur 13 s'associe alors à celle de l'écran 17.

Le rayonnement incident traverse le matériau bolométrique constituant l'élément thermométrique 14, qui est transparent dans ce mode de réalisation, puis rencontre l'ensemble constitué par l'élément absorbeur 13 et l'écran métallique 17, qui joue alors son rôle d'écran réfléchissant, puis ressort. La faiblesse de la résistance par carré de l'ensemble 13, 17 empêche l'absorption du rayonnement et, en conséquence, l'échauffement de la membrane. L'élément thermométrique 14 ne s'échauffe donc pas et sa résistance reste inchangée.

Dans une variante de réalisation non représentée, les électrodes destinées à assurer la connexion électrique entre le microbolomètre passif 12 et le substrat de support 16 ont des configurations particulières, par exemple en forme de serpentins, et constituent simultanément l'élément absorbeur 13.

Le matériau constituant les électrodes est choisi, par exemple, parmi le titane, le nitrure de titane, le platine, l'aluminium, le palladium, le nickel, l'alliage de nickel et de chrome etc. L'épaisseur des électrodes est de l'ordre de 0,005µm à 1 µm.

Dans une autre variante de réalisation non représentée, le matériau bolométrique est constitué à la fois par l'élément thermométrique 14 et par les électrodes, par exemple en forme de serpentin, et l'élément absorbeur 13 est un élément distinct.

Dans tous les cas, bien que l'écran réfléchissant 17 soit disposé sous la membrane, le microbolomètre 12 ainsi obtenu est passif, car sa membrane n'absorbe pas le rayonnement.

Un mode particulier de réalisation d'un dispositif pour la détection thermique d'un rayonnement, comportant au moins un microbolomètre actif 19 et un microbolomètre passif 12, selon la figure 3, élaborés sur le même substrat de support 16, va être décrit plus en détail au regard des figures 4 à 7.

Sur la figure 4, le procédé de réalisation du dispositif comporte d'abord les dépôts successifs, sur le substrat de support 16 portant les éléments d'ancrage 15, d'une couche sacrificielle 20, de préférence en polyimide, d'épaisseur sensiblement égale à l'épaisseur des éléments d'ancrage 15 des microbolomètres 12 et 19, et d'une couche 21 métallique, constitutive de l'écran de protection 17 du microbolomètre passif 12.

Sur la figure 5, la gravure de la couche 21, constitutive de l'écran de protection 17, uniquement en regard de l'emplacement du microbolomètre actif 19, permet de conserver un écran de protection 17 uniquement au niveau du microbolomètre passif 12. Dans le mode particulier de réalisation des figures 3 à 7, l'écran réfléchissant 17 est réalisé en matériau conducteur. Il est donc indispensable de prévoir un isolement diélectrique de cette couche par rapport aux éléments d'ancrage 15. Cet isolement est engendré, par exemple, par une coupure dans l'écran réfléchissant 17, réalisée par gravure, comme représenté sur la figure 3. Diverses couches constituant les membranes 22 des microbolomètres 12 et 19 sont ensuite déposées, sur la couche sacrificielle 20 et sur l'écran de protection 17, disposé au niveau du microbolomètre passif 12.

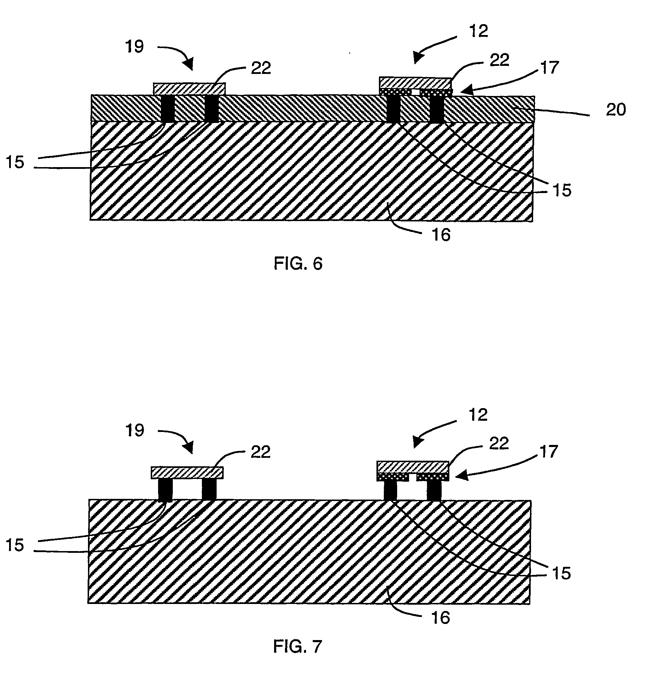

Sur la figure 6, la gravure des membranes 22 permet ensuite de délimiter les microbolomètres 12 et 19. Enfin, la gravure de la couche sacrificielle 20 permet d'obtenir le détecteur représenté à la figure 7, avec le microbolomètre passif 12, avec écran de protection 17 intégré, disposé sous sa membrane 22, et le microbolomètre actif 19, disposés sur le même substrat de support 16.

Dans le procédé de fabrication décrit ci-dessus, l'écran de protection 17 est délimité, par exemple, par des procédés de gravure chimique, plasma, ou par un procédé de lift off. Dans le cas d'un écran de protection 17 métallique, la couche métallique 18 est déposée, par exemple, par pulvérisation cathodique, ou par décomposition thermique (LPCVD).

Pour améliorer son fonctionnement, il est possible de thermaliser le microbolomètre passif 12, c'est-à-dire d'améliorer sa conductance thermique, par suppression des bras d'isolation thermique 6, présents notamment sur le microbolomètre actif 19

Dans tous les cas, la technologie des microbolomètres 12 et 19 n'est pas affectée par la mise en place de l'écran réfléchissant 17, car la fabrication de l'écran réfléchissant 17 est intégrée au processus de fabrication des microbolomètres 12 et 19. Cela entraîne un gain de temps et surtout de coût, car il n'est pas nécessaire de changer les processus et les chaînes de fabrication déjà connus des microbolomètres.

Par ailleurs, le dispositif de détection fonctionnant, de préférence, sous vide, il n'est pas obligatoire de protéger la surface de l'écran de protection 17 en contact avec le rayonnement, par un revêtement particulier.

L'invention n'est pas limitée au mode de réalisation décrit ci-dessus. Le détecteur peut comporter une architecture matricielle permettant de faire de l'imagerie infrarouge. L'architecture matricielle est composée d'une pluralité de microbolomètres actifs 19 et d'une pluralité de microbolomètres passifs 12 répartis régulièrement en lignes et en colonnes sur un même substrat de support 16. Les procédés de fabrication sont les mêmes et l'électronique de mesure intégrée au substrat de support 16 récupère et exploite chaque mesure des microbolomètres 12 et 19, afin de les transformer en imagerie infrarouge.

Le détecteur peut être encapsulé sous vide ou sous un gaz peu conducteur de la chaleur, pour gagner en performance. Le boîtier dans lequel est encapsulé le détecteur comporte alors une fenêtre transparente aux rayonnements.

Les microbolomètres 12, 19 du dispositif de détection peuvent comporter tout type d'élément thermométrique, par exemple, thermistor, électrode, diode, etc.

## Revendications

1. Procédé de réalisation d'un dispositif pour la détection thermique d'un rayonnement comportant au moins un microbolomètre actif (19) et au moins un microbolomètre passif (12), comportant chacun une membrane (22) suspendue faisant fonction d'absorbeur du rayonnement, de thermomètre et de connexions électriques, ledit procédé comportant la formation simultanée des microbolomètres actif (19) et passif (12) sur un même substrat de support (16), et la formation d'un écran réfléchissant (17) au niveau du microbolomètre passif (12), procédé **caractérisé en ce que**, la membrane (22) comportant un élément thermométrique (14) transparent au rayonnement, et un élément absorbeur (13) du rayonnement assurant les connexions électriques, le microbolomètre passif (12) est formé sur l'écran réfléchissant (17), qui comporte au moins une couche métallique (18) en contact avec l'élément absorbeur (13) de la membrane (22).

2. Dispositif réalisé par le procédé selon la revendication 1, **caractérisé en ce que** l'écran réfléchissant (17) est disposé sous la membrane (22) du microbolomètre passif (12), en contact avec l'élément absorbeur (13) de la membrane.

3. Dispositif selon la revendication 2, **caractérisé en ce que** l'épaisseur de la couche métallique (18) est de l'ordre de 500Å à 2000Å.

## Claims

1. Method for production of a device for thermal detection of radiation comprising at least one active microbolometer (19) and at least one passive microbolometer (12), each comprising a suspended membrane (22) performing the function of radiation absorber, thermometer and electrical connection, said method comprising the simultaneous formation of the active (19) and passive (12) microbolometers on a single support support (16), and the formation of a reflective screen (17) at the level of the passive microbolometer (12), method **characterized in that**, the membrane (22) comprising a thermometric element (14) transparent to the radiation, and a radiation-absorbing element (13) performing the electrical connections, the passive micro bolometer (12) is formed on the reflective screen (17), which comprises at least one metallic layer (18) in contact with the absorbing element (13) of the membrane (22).

2. Device achieved by the method according to claim 1, **characterized in that** the reflecting screen (17) is arranged underneath the membrane (22) of the passive microbolometer (12), in contact with the absorbing element (13) of the membrane.

3. Device according to claim 1, **characterized in that** the thickness of the metallic layer (18) is about 500Å to 2000Å.

## Patentansprüche

1. Verfahren zur Herstellung einer Vorrichtung zur thermischen Erfassung einer Strahlung, die mindestens ein aktives Mikrobolometer (19) und mindestens ein passives Mikrobolometer (12) umfasst, die jeweils eine aufgehängte Membran (22) umfassen, die als Strahlungsabsorbierer, Thermometer und elektrische Anschlüsse fungiert, welches Verfahren die gleichzeitige Herstellung des aktiven Mikrobolometers (19) und des passiven Mikrobolometers (12) auf ein und demselben Trägersubstrat (16) und die Bildung einer reflektierenden Wand (17) im Bereich des passiven Mikrobolometers (12) umfasst, Verfahren, das **dadurch gekennzeichnet ist, dass**, die Membran (22) ein für die Strahlung durchlässiges thermometrisches Element (14) und ein die Strahlung absorbierendes Element (13), das die elektrischen Anschlüsse bildet, umfasst, und dass das passive Mikrobolometer (12) auf der reflektierenden Wand (17) gebildet ist, die mindestens eine Metallschicht (18) umfasst, die in Kontakt mit dem absorbierenden Element (13) der Membran (22) ist.

2. Vorrichtung, die an Hand des Verfahrens nach Anspruch 1 hergestellt wurde, **dadurch gekennzeichnet, dass** die reflektierende Wand (17) unter der Membran (22) des passiven Bolometers (12) in Kontakt mit dem absorbierenden Element (13) der Membran angeordnet ist.

3. Vorrichtung nach Anspruch 2, **dadurch gekennzeichnet, dass** die Dicke der Metallschicht (18) in der Größenordnung von 500 bis 2000 Å liegt.
